**Europäisches Patentamt**

**European Patent Office**

**Office européen des brevets**

(11) Numéro de publication: **0 001 957**
**A1**

## DEMANDE DE BREVET EUROPEEN

(21) Numéro de dépôt: **78400161.2**

(22) Date de dépôt: **31.10.78**

(51) Int. Cl.²: **C 03 C 21/00**
**G 02 B 1/12, C 03 B 27/00**

(30) Priorité: **03.11.77 FR 7733006**

(43) Date de publication de la demande:
**16.05.79 Bulletin 79/10**

(84) Etats contractants désignés:
**BE CH DE FR GB LU NL SE**

(71) Demandeur: **CORNING GLASS WORKS**

**Corning Steuben New York 14830(US)**

(72) Inventeur: **Astruc, Christian Guy**
**16, rue Paul Ledroit**
**F-77140 Nemours(FR)**

(74) Mandataire: **de Boisse, Louis**
**37, Avenue Franklin D. Roosevelt**
**F-75008 Paris(FR)**

(54) Procédé de trempe chimique d'oculaires de lunetterie et pièces de verre analogues.

(57) L'invention concerne le traitement d'oculaires de verre par trempe chimique dans un bain d'un sel fondu.

L'opération de trempe chimique est scindée en deux phases: (a) une pré-trempe effectuée après avoir conféré à la lentille la finition de surface et la courbure désirées, et se déroulant dans les conditions opératoires spécifiées et pendant tout le temps nécessaire pour obtenir les caractéristiques voulues de compression superficielle et de profondeur de couche; (b) une re-trempe exécutée par l'opticien après mise en forme de la lentille, et d'une durée beaucoup plus courte que la pré-trempe.

EP 0 001 957 A1

- 1 -

## Procédé de trempe chimique d'oculaires de lunetterie et pièces de verre analogues.

Dans les techniques de confection de lentilles ophtalmiques, on effectue couramment l'opération dite de "Chemtempering" ou trempe chimique, par immersion pendant une durée assez longue des pièces de verre dans un bain de sel fondu adéquat, en général à base de nitrate de potassium et/ou de sodium, afin d'accroître la résistance aux chocs du verre par échange d'ions chimiques à sa surface et plus précisément par élimination des petits ions de celle-ci et leur remplacement par des ions plus gros provenant du bain. Pour plus de détails sur ce traitement du verre, on pourra se reporter utilement à l'article intitulé "Lentilles ophtalmiques anti-choc" de G.A. Chase paru dans le numéro 250 de novembre 1973 (pages 26-31) de la revue "L'opticien-Lunettier", ainsi qu'à l'article intitulé "La trempe chimique aujourd'hui" de C. Astruc paru dans le numéro 279 d'avril 1976 (pages 72-74) de cette même revue.

On rappellera ici simplement que la trempe chimique confère au produit traité deux paramètres fondamentaux pour le résultat recherché :
- d'une part, une compression de surface qui précontraint la pièce de verre et lui confère sa résistance

au choc,

- d'autre part, la profondeur de la couche superficielle en compression qui procure à cette pièce son
aptitude à la résistance aux rayures.

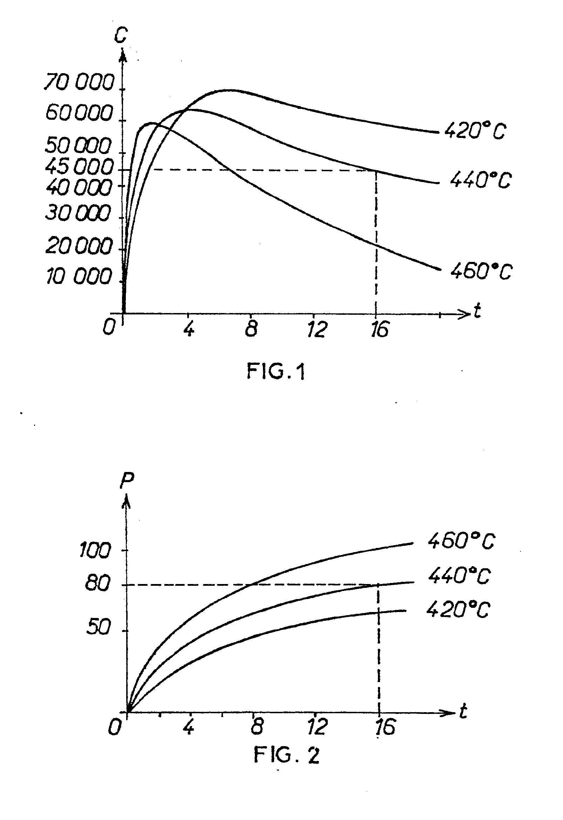

On détermine le temps et la température de traitement
à partir de mesures de compression et de profondeur de
couche, matérialisées par les courbes des figures 1 et
2 des dessins annexés qui illustrent respectivement
l'évolution des valeurs de compression C en p.s.i.
(1 p.s.i. = 0,0703 kg/cm$^2$) dans le premier cas et de
profondeur de couche P en microns dans le second cas,
en fonction du temps $t$ en heures dans les deux cas,
et ce pour trois valeurs de température de bain, à
savoir 420°C, 440°C et 460°C.

Ces courbes font apparaître la nécessité d'un compromis "compression/profondeur de couche", puisque la
compression C décroît en fonction du temps après une
montée rapide (voir figure 1), tandis que la profondeur
de couche P, elle, ne cesse d'augmenter avec le temps.
Or il a été établi qu'une profondeur de couche minimale de 70 microns et une compression minimale de
40.000 p.s.i. (env. 2800 kg/cm$^2$), étaient nécessaires.
Ceci conduit par exemple à un traitement de 16 heures
dans un bain à 440°C, conférant une compression de
45.000 p.s.i. (env. 3200 kg/cm$^2$) et une profondeur de
couche de 80 microns.

On ne peut guère descendre au-dessous de 8 heures avec
un bain à 460°C.

On remarque donc que l'effet de compression obtenu
par la trempe chimique intéresse une couche superficielle extrêmement mince de l'oculaire, de sorte que
ce dernier ne saurait, sous peine d'annihiler ledit effet, faire l'objet de manipulations ultérieures de retouche ou façonnage qui risqueraient de détruire la pellicule en cause. Ceci revient à dire qu'en pratique la trempe chimique se situe après la dernière opération de façonnage, c'est-à-dire le découpage de la lentille pour sa mise en forme selon la configuration de la monture choisie par le client, opération ayant lieu en règle générale dans l'atelier de l'opticien auquel s'adresse ce dernier.

En d'autres termes, la trempe chimique décrite plus haut constitue, dans le processus général d'élaboration des lentilles, une phase opératoire terminale qui vient se placer au-delà du découpage en vue du montage final de lunettes et qui incombe donc normalement à l'opticien effectuant ledit découpage et ledit montage.

Il est clair qu'à ce niveau qui est celui d'une petite ou moyenne entreprise ne fonctionnant que pendant les heures ouvrables, des durées de traitement de 8 à 16 heures requises pour la trempe chimique, ainsi qu'on l'a vu, constituent une sujétion extrêmement gênante.

Aussi a-t-on songé à en affranchir totalement l'opticien et à reporter intégralement l'opération de trempe chimique en amont dans la chaîne des opérateurs qui part de l'industriel verrier fabriquant l'ébauche brute en passant par l'industriel surfaceur conférant à celle-ci la finition de surface et la précision de courbure voulues, avant livraison à l'opticien. Un tel report global de la trempe chimique est ainsi envisagé dans le brevet français 75 11024 publié sous le No. 2 267 563 et déposé le 9 Avril 1975. Mais on se heurte alors au défaut signalé résultant des manipulations mécaniques ultérieures pour le façonnage

- 4 -     0001957

final de la lentille trempée.

La présente invention a pour but de résoudre les difficultés découlant des relations chronologiques entre les opérations de façonnage et de trempe chimique.

Conformément à la présente invention, l'opération de trempe chimique n'est plus unitaire comme jusqu'ici, mais scindée en deux phases (a) une première phase de pré-trempe effectuée chez le fabricant d'oculaires (surfaceur) après avoir conféré à la lentille la finition de surface et la courbure désirées et par conséquent avant livraison à l'opticien, cette pré-trempe se déroulant dans les conditions opératoires spécifiées et pendant tout le temps nécessaire (par exemple 8 à 16 heures) pour obtenir les caractéristiques voulues de compression superficielle et de profondeur de couche, de sorte que l'opticien pourra disposer d'un stock de lentilles pré-trempées prêtes à être mises en forme par lui à la demande; (b) une seconde phase de re-trempe ou de post-trempe exécutée par l'opticien après mise en forme de la lentille et d'une durée beaucoup plus courte que ladite pré-trempe (par exemple 15 à 60 minutes).

La description qui va suivre en regard des dessins annexés, donnée à titre d'exemple non limitatif, fera bien comprendre comment l'invention peut être réalisée.

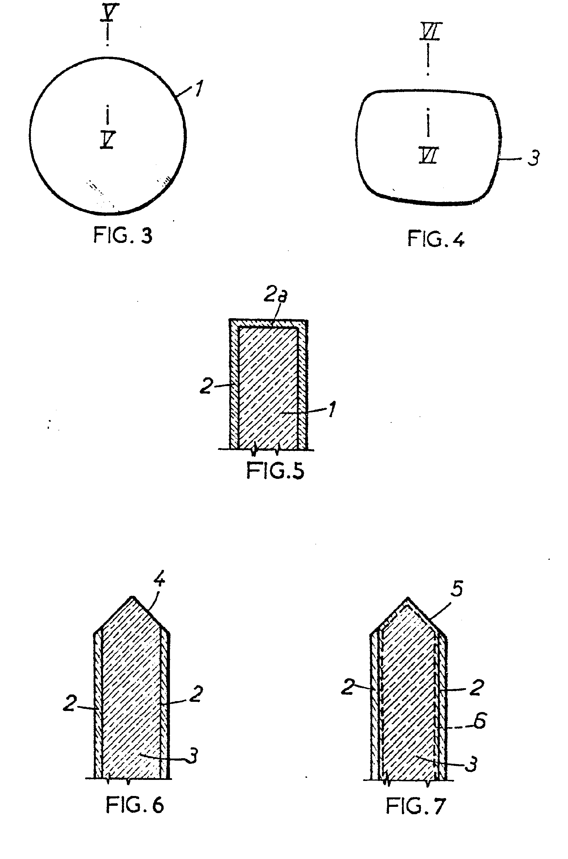

Les figures 1 et 2 sont des graphiques caractéristiques de trempe chimique auxquels il a été fait référence dans le préambule ci-dessus; les figures 3 et 4 sont des vues en plan d'une lentille pré-trempée conformément à la présente invention, respectivement avant et après mise en forme par l'opticien; les figures 5 et 6 sont des vues schématiques en coupe partielle à plus grande échelle selon les lignes V-V et VI-VI des figures 3 et 4 respectivement; la figure 7 est une vue en coupe analogue à celle de la figure 6, après re-trempe conformément à la présente invention.

Ainsi qu'il vient d'être dit, le procédé selon la présente invention permet de réduire considérablement le temps de la phase de trempe incombant à l'opticien, tout en conservant les propriétés de résistance mécanique qui découlent de la pré-trempe incombant au fabricant d'oculaires, lequel opère dans les conditions normales dégagées des courbes caractéristiques des figures 1 et 2.

Pour reprendre l'exemple numérique donné dans le préambule, le fabricant trempe l'ébauche 1 représentée circulaire sur la figure 3, dans un bain à 440°C pendant 16 heures, ce qui donne à la pièce une couche superficielle 2 (figure 5) de 80 microns d'épaisseur sous une compression de 45.000 p.s.i. (environ 3200 kg/cm$^2$), laquelle couche recouvre également le bord de la pièce, comme représenté en 2a.

L'opticien disposant de cette ébauche trempée 1, procède de façon usuelle à sa mise en forme par découpage et lui donne la configuration voulue 3 visible sur la figure 4, avec bord chanfreiné 4 (voir figure 6) pour insertion sur la monture. Si l'on compare les coupes schématiques des figures 5 et 6, on s'aperçoit que cette opération de façonnage a eu pour effet de détruire la couche périphérique 2a et de mettre à nu le chanfrein 4, avec comme conséquence la disparition des contraintes de compression sur la périphérie du verre, entraînant une forte diminution de résistance mécanique.

On remédie aisément à ce défaut par la re-trempe ou post-trempe de courte durée (par exemple 30 minutes) préconisée par la présente invention, après mise en forme de la lentille 3. L'explication en est simple, si l'on se reporte à nouveau aux courbes caractéristiques des figures 1 et 2 :

- Le bord chanfreiné 4 étant à nu se comporte comme un verre vierge de trempe et de ce fait il se trempera fortement et promptement, parcourant le flanc ascendant rapide des courbes de compression de la figure 1 (le niveau de 45.000 étant atteint au bout d'environ 30 minutes), avec cependant une faible profondeur de couche 5 visible sur la figure 7 (15 à 25 microns selon la figure 2, en ce même laps de temps de 30 minutes). Il faut toutefois remarquer qu'une telle profondeur réduite de la couche 5 n'est nullement rédhibitoire car on se trouve là à la périphérie de l'oculaire, c'est-à-dire sur une partie qui n'est pas exposée aux rayures et qui est de plus encastrée et donc protégée par la monture.

- Par contre, les deux faces de la lentille, demeurées inaltérées lors du découpage et conservant par conséquent l'intégralité de leurs couches trempées 2, 2, ne seront que peu sensibles à cette courte re-trempe, étant sur le flanc descendant en pente douce des courbes caractéristiques de la figure 1 (la diminution de compression est faible lorsqu'on passe de l'abscisse 16 h à l'abscisse 16 h 30), l'épaisseur de couche s'accroissant à l'inverse très légèrement comme représenté en 6 sur la figure 7.

Revendications de brevet

1. Procédé de traitement d'oculaires de lunetterie et pièces de verre analogues par trempe chimique dans un bain d'un sel fondu adéquat, caractérisé en ce que l'opération de trempe chimique ne se déroule pas en un seul temps, mais est scindée en deux phases : (a) une première phase de pré-trempe effectuée de la façon classique après avoir conféré à la lentille la finition de surface et la courbure désirées, cette pré-trempe se déroulant dans les conditions opératoires spécifiées et pendant tout le temps nécessaire pour obtenir les caractéristiques voulues de compression superficielle et de profondeur de couche, de sorte que l'opticien pourra disposer d'un stock de lentilles pré-trempées prêtes à être mises en forme par lui à la demande; (b) une seconde phase de re-trempe ou de post-trempe pouvant être exécutée commodément par l'opticien après mise en forme de la lentille, cette re-trempe étant d'une durée beaucoup plus courte que ladite pré-trempe.

2. Procédé selon 1, caractérisé en ce que la première phase de pré-trempe peut être effectuée chez le surfaceur ou fabricant d'oculaires et par conséquent avant livraison à l'opticien, cette première phase se déroulant pendant la durée usuelle compte tenu de la température du bain, par exemple une durée de l'ordre de 8 à 16 heures.

3. Procédé selon 1 ou 2, caractérisé en ce que la seconde phase de re-trempe ou de post-trempe a une durée ne dépassant pas sensiblement 1 heure, cette durée étant par exemple de 15 à 60 minutes et notamment de l'ordre de 30 minutes.

FIG. 1

FIG. 2

FIG. 3

FIG. 4

FIG. 5

FIG. 6

FIG. 7

0001957

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.³) |
|---|---|---|---|
| | GB - A - 1 076 603 (P.P.G.)<br>* Revendications 1 et 7; page 5, lignes 94-100; page 11, lignes 106-111 *<br><br>-- | 1 | C 03 C 21/00<br>G 02 B 1/12<br>C 03 B 27/00 |
| A | US - A - 4 036 623 (AMERICAN OP-TICAL CORPORATION)<br>* Revendication 1 *<br><br>-- | 1 | |
| A | FR - A - 2 134 552 (NIPPON SHEET GLASS CO.)<br>* Page 11, revendication 1 *<br><br>---- | 1 | |

**DOMAINES TECHNIQUES RECHERCHES (Int. Cl.²)**

C 03 C 21/00
G 02 C 7/02
7/00
G 02 B 1/10
1/12
C 03 B 27/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 06-02-1979 | VAN DEN BULCKE |

OEB Form 1503.1 06.78